# EUROPEAN PATENT SPECIFICATION

(11) **EP 2 915 596 B1**
(45) Date of publication and mention of the grant of the patent: **19.09.2018**
(21) Application number: 15157361.5
(22) Date of filing: 03.03.2015
(51) Int. Cl.: B07C 3/14

(54) **DELIVERY SORTING PROCESSING SYSTEM**
VERARBEITUNGSSYSTEM ZUR AUSGABESORTIERUNG
SYSTÈME DE TRAITEMENT DE TRI DE LIVRAISON

(30) Priority: 06.03.2014 JP 2014044298
(43) Date of publication of application: 09.09.2015
(73) Proprietor: Kabushiki Kaisha Toshiba, Minato-ku Tokyo 105-8001 (JP)
(72) Inventor: Maeda, Masaya, Tokyo, Tokyo 105-8001 (JP); Hamamura, Tomoyuki, Tokyo, Tokyo 105-8001 (JP); Watanabe, Yuka, Tokyo, Tokyo 105-8001 (JP); Piao, Ying, Tokyo, Tokyo 105-8001 (JP); Irie, Bunpei, Tokyo, Tokyo 105-8001 (JP); Baba, Kenji, Tokyo, Tokyo 105-8001 (JP)
(74) Representative: Horn Kleimann Waitzhofer Patentanwälte PartG mbB

(56) References cited:
- WO-A2-01/46899
- JP-A- 2005 284 502
- US-A1- 2009 285 447

## Description

### FIELD

The present invention relates to a delivery sorting processing system.

### BACKGROUND

Conventionally, a delivery sorting processing system recognizing characters from an image obtained by photographing a delivery, identifying a delivery address from the recognized characters, and sorting the delivery automatically has been used. However, when the adjustment of the system is insufficient, the character recognition processing becomes inappropriate, and in some cases, the identified address is not relevant to the delivery address.
US 2009/0285447 A1 discloses a method for sorting mail including performing an automatic address recognition process on a digitized image of a mail piece and generating a plurality of conditional address recognition results and a plurality of confirmation values each associated with one of the plurality of conditional address recognition results. The method can include sending the digitized image, the plurality of conditional address recognition results and the plurality of confirmation values to a video coding system. The method can include detecting a possible error in a first video coding result, the possible error detected using error correction information including information from the automatic address recognition process.; The method may include indicating the possible error to a video coding operator, and performing a video coding operation to obtain a second video coding result and arbitrating or selecting one of the results as output.

### BRIEF DESCRIPTION OF DRAWINGS

Fig. 1 is a diagram illustrating an example of a functional configuration of a delivery sorting processing system in an embodiment.
Fig. 2 is a flowchart illustrating an example of a sorting processing according to the embodiment.
Fig. 3 is a diagram for explaining information stored in a storage section.
Fig. 4 is a diagram illustrating an example of an interface display screen displayed in an image display section when a sorting destination cannot be confirmed.
Fig. 5 is a diagram illustrating an example of an interface display screen where an area A2 is magnified and displayed by being selected by an operator.
Fig. 6 is a diagram illustrating an example of information which corresponds to a candidate for a delivery destination area selected by an operator and which is stored in an area selection information storage section.
Fig. 7 is a flowchart illustrating an example of diagnosis processing according to the embodiment.
Fig. 8 is a diagram illustrating an example of an interface display screen displayed in a warning display section of a warning display terminal and indicating a determination result of determination.
Fig. 9 is a diagram showing another configuration example of a delivery sorting processing system.
Fig. 10 is a flowchart illustrating an example of a flow of processing in a modification.

### DETAILED DESCRIPTION

The invention is defined by a delivery sorting processing system according to claim 1.

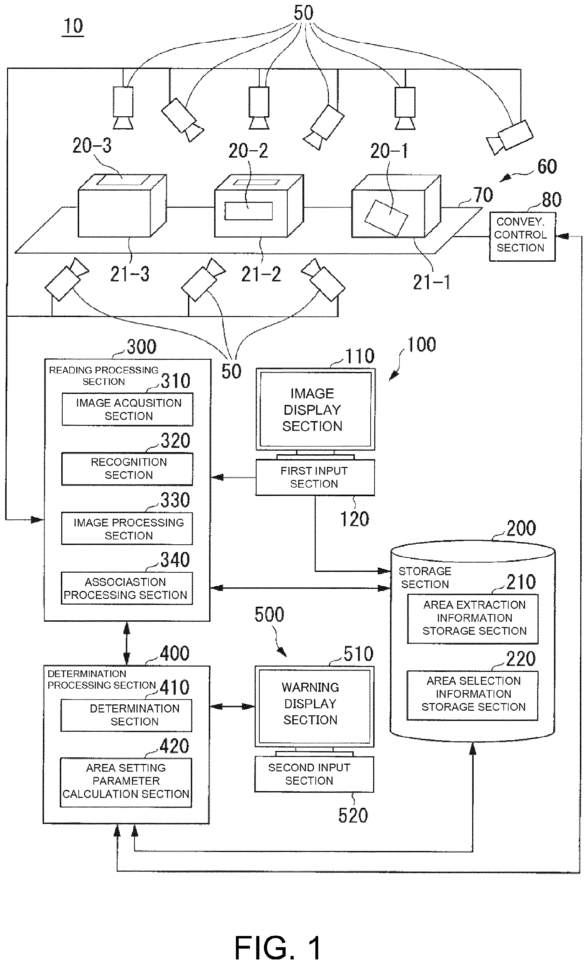

In the following, a delivery sorting processing system in an embodiment will be described with reference to the drawings. Fig. 1 is a diagram illustrating an example of a functional configuration of a delivery sorting processing system 10 in an embodiment. The delivery sorting processing system 10 illustrated in Fig. 1 is a system that sorts a delivery 21 according to a delivery destination. For example, the delivery 21 is a delivery to be delivered by a home delivery service. The delivery 21 is collected in a delivery sorting center via a primary receiving location where a delivery is brought by a sender. In the delivery sorting center, the delivery 21 is placed on a conveyance mechanism such as a conveyor and a roller by a courier, and conveyed to a sorting box corresponding to a delivery destination. Conveying the delivery 21 to the sorting box corresponding to the delivery destination is referred to as sorting processing.

In the example illustrated in Fig. 1, deliveries 21-1, 21-2, and 21-3 to which shipping bills 20-1, 20-2, and 20-3 in which delivery destination information is described are respectively affixed are conveyed to sorting boxes corresponding to the respective delivery destinations by a belt conveyor 70. In the following, the shipping bill 20-1, 20-2 and 20-3 will be referred to as a shipping bill 20 without distinction, and the deliveries 21-1, 21-2, and 21-3 will be referred to as the delivery 21 without distinction. In the following, the sorting box may be referred to as a sorting destination.

Fig. 1 illustrates an example where the shipping bill 20 in which the delivery destination information is described is affixed to the delivery 21, but a tag in which the delivery destination information is described may be attached to the delivery 21, or the delivery destination information may be directly described or printed on the delivery 21. That is, the delivery destination information only needs to be associated with the delivery 21 being a processing target, as semantic information displayed on the delivery 21. In addition, the delivery destination information described in the shipping bill 20 may be character information indicating an address and the like, or may be symbolic information obtained by encoding identification information (for example, a numeric string) indicating the delivery destination. The symbolic information is, for example, a bar code.

The delivery sorting processing system 10 includes, for example, a plurality of scanners 50, a reading processing section 300, a determination processing section 400, an image display terminal 100, a warning display terminal 500, a storage section 200, and a conveying section 60.

The plurality of scanners 50 photographs the shipping bill 20 affixed to the delivery 21 arriving at a predetermined photographing position and outputs an image (image data). The scanners 50 are, for example, scanners of a line scan method capable of photographing the moving delivery 21 at high resolution. The plurality of scanners 50 is installed at positions where the delivery 21 can be photographed from mutually different angles. For example, the plurality of scanners 50 is each installed in a position where a top surface and four side surfaces of the delivery 21 can be photographed. It is to be noted that, for example, a scanner 50 may be a camera capable of photographing a predetermined plane area at a time.

The conveying section 60 includes the belt conveyor 70, and a conveyance control section 80 driving the belt conveyor 70. In the conveying section 60, the belt conveyor 70 is driven based on a signal output from the conveyance control section 80. Thereby, the belt conveyor 70 moves the delivery 21 placed thereon. Among the plurality of sorting boxes, the conveying section 60 conveys the delivery 21 to the sorting box corresponding to a processing result of the reading processing section 300 or the determination processing section 400. The conveyance control section 80 controls a conveyance state of the conveying section 60. For example, the conveyance control section 80 controls the speed of the belt conveyor 70, a route to the sorting box of the delivery 21, and the like.

The image display terminal 100 includes an image display section 110 and a first input section 120. The first input section 120 is an input section. The image display section 110 displays information which the reading processing section 300 reads from the scanner 50 based on a signal output from the reading processing section 300. In addition, the first input section 120 is a device for receiving an operation of selecting a portion of the information displayed by the image display section 110, an operation of giving an instruction to subject a portion of the displayed information to predetermined processing, or the like. The first input section 120 outputs information corresponding to a received operation to the reading processing section 300.

The reading processing section 300 and the determination processing section 400 of the delivery sorting processing system 10 include a processor such as a CPU (Central Processing Section). In addition, the delivery sorting processing system 10 includes the storage section 200 such as a ROM (Read Only Memory), a RAM (Random Access Memory), an HDD, and a flash memory. In addition, the delivery sorting processing system 10 includes, as a software function section that functions by the processor executing a program stored in the storage section 200, an image acquisition section 310, a recognition section 320, an image processing section 330, an association processing section 340, a determination section 410, and an area setting parameter calculation section 420. It is to be noted that some or all of these software function sections may be a hardware function section such as an LSI (Large Scale Integration) and an ASIC (Application Specific Integrated Circuit).

The storage section 200 includes an area extraction information storage section 210, and an area selection information storage section 220. In the area extraction information storage section 210, information corresponding to a candidate for a delivery destination area described below is stored. In addition, in the area selection information storage section 220, a candidate for a delivery destination area selected by an operator's operation described below and a candidate for a delivery destination area of the highest priority are stored in association with each other.

The reading processing section 300 includes the image acquisition section 310, the recognition section 320, the image processing section 330, and the association processing section 340.

The image acquisition section 310 acquires an image of the delivery 21 which the scanner 50 photographs.

The recognition section 320 recognizes the semantic information including the delivery destination information which is recognizable from the image that the image acquisition section 310 acquires. That is, the recognition section 320 recognizes the semantic information displayed on the shipping bill 20 affixed to the delivery 21, or on the delivery 21. For example, the recognition section 320 may recognize the character information by OCR (Optical Character Recognition) from the image obtained by the scanner 50 photographing, and may further recognize the delivery destination information based on the character information recognized by OCR. It is to be noted that the recognition section 320 may recognize the symbolic information (such as a bar code) from the image obtained by the scanner 50 photographing. In this case, the recognition section 320 recognizes the identification information by decoding the symbolic information. In addition, by disposing a plurality of laser devices (not shown) irradiating the delivery 21 with lasers from the respective directions in the delivery sorting processing system 10, the recognition section 320 may measure a shape of the delivery 21 based on reflected light beams, and may recognize the semantic information by using an image corrected in accordance with the measurement result. Thereby, the image corrected in accordance with the shape of the delivery 21 can be acquired, and therefore, the recognition section 320 can recognize the semantic information with higher accuracy.

The image processing section 330 recognizes information described on the delivery 21 and information described in the shipping bill 20 from the semantic information the recognition section 320 recognizes. That is, the image processing section 330 recognizes the delivery destination information such as a postal code, an address, and a name. In addition, based on the semantic information which the recognition section 320 recognizes, the image processing section 330 extracts from the image an area which is to be a candidate for an area where the delivery destination information is described. Here, the candidate for the delivery destination area extracted by the image processing section 330 based on the semantic information is referred to as a "delivery destination candidate area".

In addition, for each of delivery destination candidate areas extracted, the image processing section 330 determines priority according to a possibility of being relevant to the delivery destination area of the delivery 21. Hereinafter, the delivery destination candidate area with the highest possibility of the delivery destination area is referred to as a "delivery destination candidate area of the highest priority".

In addition, the image processing section 330 determines whether the sorting destination corresponding to the delivery destination can be confirmed in the delivery destination candidate area of the highest priority (that is, whether a predetermined condition is satisfied).

Here, the case where the sorting destination cannot be confirmed means the following cases. For example, it is a case where all or a portion of the information of the delivery destination candidate area of the highest priority is unclear, and therefore, the image processing section 330 cannot accurately recognize the delivery destination information such as a postal code, an address, and a name. In addition, for example, a case where the image processing section 330 cannot extract the delivery destination candidate area from the image, and a case where the semantic information obtained by the recognition section 320 lacks information to confirm the sorting destination are also included in the case where the sorting destination cannot be confirmed. In addition, for example, a case where the image processing section 330 can extract the delivery destination candidate area, but cannot determine the delivery destination candidate area of the highest priority is also included in the case where the sorting destination cannot be confirmed. It is to be noted that the conditions of the case where the sorting destination cannot be confirmed can be appropriately set.

When the predetermined condition is satisfied, that is, when the image processing section 330 can determine the sorting destination from the delivery destination information by referring to a table where the delivery destination information and the sorting destination are associated with each other, the image processing section 330 outputs the confirmed sorting destination to the association processing section 340.

When the predetermined condition is not satisfied, the image processing section 330 outputs the purport that the predetermined condition is not satisfied to the association processing section 340, and then, as described below, confirms the sorting destination corresponding to the delivery destination by acquiring sorting information from the first input section 120 of the image display terminal 100. Then, the image processing section 330 outputs the confirmed sorting destination to the association processing section 340.

When the predetermined condition is satisfied, the association processing section 340 processes the delivery 21 based on the confirmed sorting destination from the image processing section 330. That is, the association processing section 340 processes the delivery 21 based on the information described in the delivery destination candidate area of the highest priority. Processing the delivery 21 means, for example, instructing the conveyance control section 80 to convey the delivery 21 to the sorting box (that is, sorting destination) corresponding to the destination (that is, delivery destination). In addition, the association processing section 340 stores in the storage section information corresponding to a result of processing the delivery based on the information described in the delivery destination candidate area of the highest priority when the predetermined condition is satisfied.

In addition, when the predetermined condition is not satisfied, the association processing section 340 outputs the delivery destination candidate area which the image processing section 330 extracts to the image display section 110 of the image display terminal 100, and then, processes the delivery 21 based on the confirmed sorting destination from the image processing section 330. That is, the association processing section 340 processes the delivery 21 based on the sorting information input by the operator based on the information described in the delivery destination candidate area selected by the operator's operation.

Further, the association processing section 340 stores the delivery destination candidate area determined to have high priority, and the delivery destination candidate area selected as the delivery destination area by the operator's operation on the first input section 120 in association with each other in the area extraction information storage section 210. It is to be noted that the association processing section 340 may store in the storage section 200 the semantic information which the recognition section 320 recognizes. In addition, the association processing section 340 may store in the storage section 200 the semantic information recognized by the recognition section 320, in association with the candidate for each of the delivery destination areas extracted by the image processing section 330, and the priority determined according to the possibility of being relevant to the delivery destination area determined by the image processing section 330.

The determination processing section 400 includes the determination section 410, and the area setting parameter calculation section 420. The determination section 410 refers to the area extraction information storage section 210 and the area selection information storage section 220, and determines whether there is a match between the delivery destination area determined to have high priority by the image processing section 330 (delivery destination candidate area of the highest priority) and the delivery destination candidate area selected as the delivery destination area by the operator. In addition, the determination section 410 outputs the determination result of whether there is a match to the warning display terminal 500.

The warning display terminal 500 includes a warning display section 510 and a second input section 520. The warning display section 510 displays the determination result determined by the determination section 410, or the results processed and calculated by the area setting parameter calculation section 420. The second input section 520 is a device for receiving the operations on the determination section 410 and the area setting parameter calculation section 420.

The area setting parameter calculation section 420 calculates a parameter for extracting an area to be the delivery destination candidate area based on the information stored in the area extraction information storage section 210 and the area selection information storage section 220. Further, the area setting parameter calculation section 420 calculates a parameter for determining the delivery destination candidate area of the highest priority based on the information stored in the area extraction information storage section 210 and the area selection information storage section 220.

The area setting parameter calculation section 420 outputs the calculated parameters to the reading processing section 300. The reading processing section 300 outputs the parameters calculated by the area setting parameter calculation section 420 to the image processing section 330. The image processing section 330 performs processing using the input parameters.

The area setting parameter calculation section 420 calculates a parameter for extracting the delivery destination candidate area and a parameter for determining the priority of the delivery destination candidate area, using the information indicating the delivery destination candidate area stored in the area extraction information storage section 210 and the information indicating the priority of the delivery destination candidate area stored in the area extraction information storage section 210. By preparing a plurality of test images for verifying the performance difference in advance and applying the parameters that the area setting parameter calculating section 420 calculates to the test images, the delivery sorting processing system can determine the appropriateness of the parameters and the adverse effects of the parameters that the area setting parameter calculating section 420 calculates.

### (Operation of Sorting Processing)

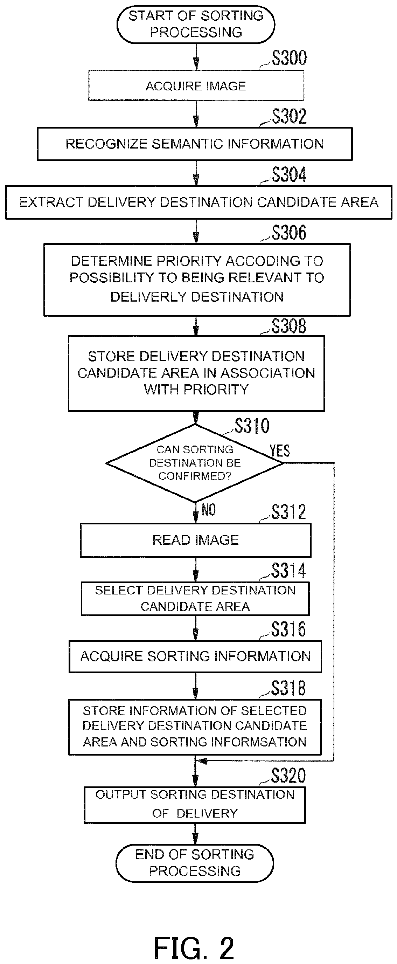

In the following, an operation of the sorting processing performed in the delivery sorting processing system 10 in the embodiment will be described with reference to Fig. 2. Fig. 2 is a flowchart illustrating an example of the sorting processing in the embodiment. This flowchart shows a basic flow of the processing of sorting the delivery 21 into the sorting box corresponding to the delivery destination in the delivery sorting processing system 10 shown in Fig. 1. For example, when the delivery 21 that is collected via the primary receiving location is placed on the belt conveyor 70, the sorting processing is started.

First, the scanner 50 photographs the delivery 21 that is being conveyed by being placed on the belt conveyor 70, and outputs an image. The image acquisition section 310 acquires the image output from the scanner 50, and outputs the image to the recognition section 320 (step S300).

The recognition section 320 receives the image from the image acquisition section 310, and performs the processing of recognizing the semantic information described in the shipping bill 20 affixed to the delivery 21 from the image (step S302).

The image processing section 330 extracts from the image the area (delivery destination candidate area) to be a candidate for the delivery destination area where the delivery destination information is described, based on the semantic information the recognition section 320 recognizes (step S304). It is to be noted that a method for extracting the delivery destination candidate area will be described below.

Next, with respect to the extracted delivery destination candidate area, the image processing section 330 determines the priority according to the possibility of being relevant to the delivery destination area (step S306). It is to be noted that a method for determining the priority according to the possibility of being relevant to the delivery destination area will be described below.

The association processing section 340 stores the delivery destination candidate area in the area extraction information storage section 210 in association with the priority according to the possibility of being relevant to the delivery destination area (step S308).

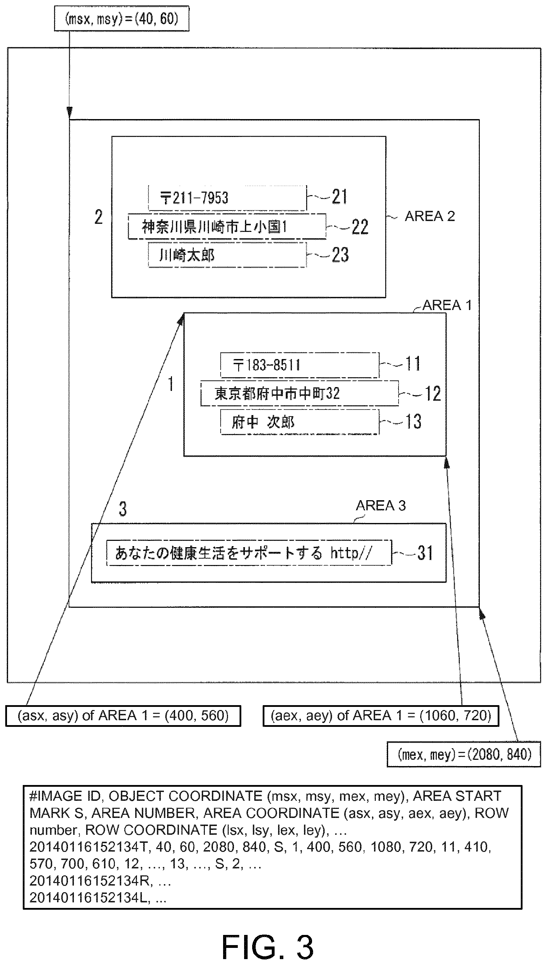

Here, the information stored in the area extraction information storage section 210 will be described. In the image from which the semantic information is recognized by the recognition section 320, a coordinate value indicating a position of an object on the image and predetermined identification information are attached. Fig. 3 is a diagram for explaining the information stored in the area extraction information storage section 210. An upper diagram of Fig. 3 shows areas or character strings in the image, and a lower diagram of Fig. 3 illustrates a format of the information stored in the area extraction information storage section 210. The upper diagram of Fig. 3 shows an example in which three areas (areas 1 to 3) are extracted in the delivery 21.

The priority of the area 1 is determined to be the highest, and the priority of the area 2 is determined to be the second highest, and the priority of the area 3 is determined to be the lowest. The area 1 includes character strings 11, 12, and 13, and the area 2 includes character strings 21, 22, and 23, and the area 3 includes a character string 31.

The coordinate value on the image corresponds to the position of a pixel of the image, and indicate in which pixel in the vertical direction and in which pixel in the horizontal direction a specific pixel in the image exists. For example, as illustrated in the lower diagram of Fig. 3, in the area extraction information storage section 210, an image identifier ("20140116152134T") automatically assigned to each image, an object coordinate ("msx", "msy", "mex", and "mey") indicating a position range of the object (delivery 21) in the image, an area start mark ("s") being a mark indicating that the area information starts from the following item, an area number indicating the priority of the recognized delivery destination candidate area, an area coordinate ("asx", "asy", "aex", and "aey"), a number and coordinate ("lsx", "lsy", "lex", and "ley") on the screen of each character string (character row), and the like are set. These pieces of information are stored in the area extraction information storage section 210 by the association processing section 340.

In addition, in the area extraction information storage section 210, for example, a coordinate value corresponding to an area including a plurality of character rows, which is obtained based on the position relation between each of the character row coordinates extracted by the image processing section 330, information related to the priority determined by the image processing section 330 and the delivery destination candidate area corresponding to the priority, the semantic information recognized by the recognition section 320 for each delivery destination candidate area, and the like may be stored. In addition, the association processing section 340 may store an image acquired by the image acquisition section 310 in the area extraction information storage section 210.

The association processing section may store in the storage section any one of an image the image acquisition section acquires, a coordinate value corresponding to an image of the delivery, a coordinate value corresponding to a candidate for each of delivery destination areas of the delivery, a coordinate value corresponding to each of character rows in each of the delivery destination areas, a coordinate value corresponding to an area including a plurality of rows together based on a position relation of each of the character rows extracted by the image processing section, information on the priority determined by the image processing section and a candidate for the delivery destination area corresponding to the priority, and semantic information recognized by the recognition section with respect to a candidate for each of the delivery destination areas, in association with the candidate for the delivery destination area determined to have high priority by the image processing section and the candidate for the delivery destination area selected by an input of an operator's operation the input section receives.

Returning to Fig. 2, the description on the flowchart will be continued. The image processing section 330 determines whether the sorting destination of the delivery destination can be confirmed (whether the predetermined condition is satisfied) in the delivery destination candidate area determined as the area of the highest priority in step S306 (step S310). That is, the image processing section 330 determines whether the sorting destination corresponding to the delivery destination of the delivery 21 can be confirmed.

When the image processing section 330 determines in the processing of step S310 that the sorting destination corresponding to the delivery destination can be confirmed, the image processing section 330 outputs the confirmed sorting destination to end the sorting processing (step S320). When the sorting destination corresponding to the delivery destination cannot be confirmed, the image processing section 330 proceeds to processing in step S312.

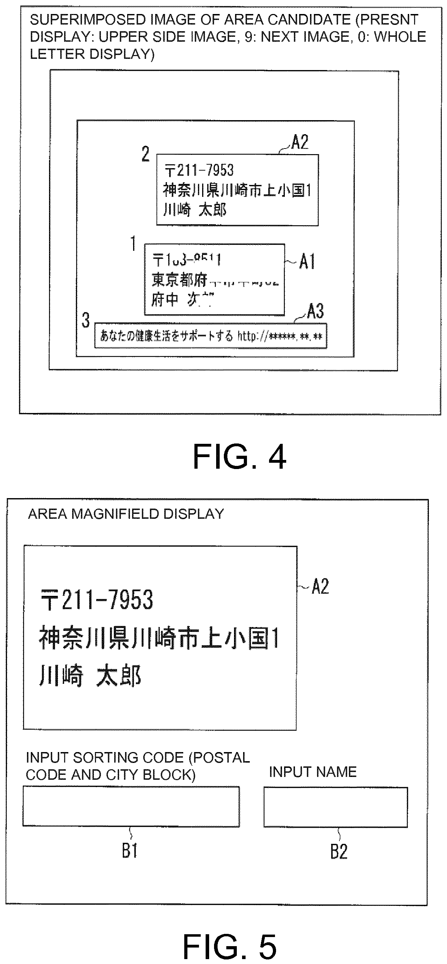

When the image processing section 330 determines in the processing of step S310 that the sorting destination cannot be confirmed, the association processing section 340 causes the image display section 110 to display the image (step S312). Fig. 4 shows an example of an interface display screen displayed in the image display section 110 when the image processing section 330 cannot confirm the sorting destination. An area A1 shown in Fig. 4 is the delivery destination candidate area determined to have the highest priority by the image processing section 330 in the processing of step S306. In addition, an area A2 shown in Fig. 4 is the delivery destination candidate area determined to have the second highest priority by the image processing section 330 in step S306. In the same manner, an area A3 shown in Fig. 4 is the delivery destination candidate area determined to have the third highest priority by the image processing section 330 in step S306. As shown in Fig. 4, the image display section 110 displays a numeral indicating the priority determined by the image processing section 330 ("1", "2", and "3" in Fig. 4) at the left end of each of the areas in association with each of the areas. For example, the image display section 110 displays "1" near the area A1 by an output from the association processing section 340. In addition, the image display section 110 displays "2" near the area A2 and "3" near the area A3 by an output from the association processing section 340.

Then, the operator of the delivery sorting processing system 10 selects the delivery destination candidate area as the delivery destination area on the screen displayed in the image display section 110 in step S312 via the first input section 120 (step S314). The first input section 120 receives, for example, the selection of the desired delivery destination candidate area by an input by a mouse, an input by a keyboard, or an input by a touch panel. In the image display terminal 100, the selected delivery destination candidate area may be displayed at magnification.

When the operator selects any of the areas, the area is magnified and displayed. Fig. 5 is an example of the interface display screen in which the area A2 is magnified and displayed by being selected by the operator. As described above, in the case shown in Fig. 4, the image processing section 330 determines the area A1 as the delivery destination candidate area of the highest priority. However, the semantic information described in the area A1 is information not recognized by the image processing section 330. Therefore, the image processing section 330 determines that the sorting destination of the delivery destination cannot be confirmed. In the example of Fig. 5, the delivery destination candidate area which the operator selects via the first input section 120 as having the highest possibility of being relevant to the delivery destination area is different from the delivery destination candidate area of the highest priority that the image processing section 330 determines.

The image processing section 330 acquires the sorting information which is input by the operator via the first input section 120 of the image display terminal 100 (step S316). The image display section 110 receives the input of the sorting information by the interface display screen shown in Fig. 5. The sorting information is information used for sorting the delivery in the delivery sorting processing system among pieces of the delivery destination information. The image processing section 330 determines the sorting destination corresponding to the sorting information based on the sorting information. As shown in Fig. 5, for example, the interface display screen displayed in the image display section 110 is provided with input fields B1 and B2 for respectively inputting a sorting code and a name, which are the semantic information the image processing section 330 cannot recognize. The operator operates the first input section 120, and inputs the sorting code and the name as the delivery destination information. That is, the operator recognizes the character information described in the area A2 from the image displayed in the image display section 110, and inputs the recognized information (character) in the input field. It is to be noted that the image display section 110 may display, in addition to a sorting code and a name, a postal code, an address, a city block, a building name, a phone number, and the like, as the input fields for the operator to input the character information which the image processing section 330 cannot recognize.

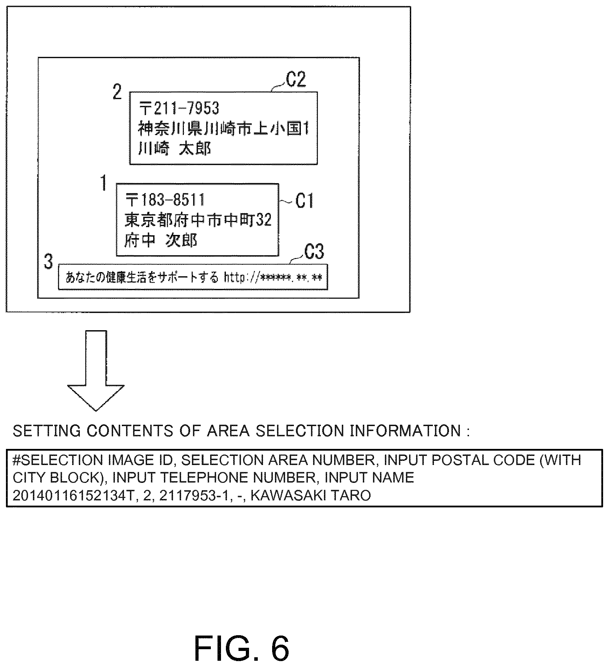

The association processing section 340 associates the information of the delivery destination candidate area selected by the operator with the sorting information input by the operator and the delivery destination information such as a name, and writes them into the area selection information storage section 220 (step S318). Fig. 6 shows an example of the information which corresponds to the delivery destination candidate area selected by the operator and which is stored in the area selection information storage section 220. For example, as shown in Fig. 6, when an area C1, an area C2, and an area C3 are extracted as the delivery destination candidate areas by the image processing section 330, but the delivery destination information cannot be accurately recognized in the image processing section 330, the image is presented to the operator, and the delivery destination candidate area is manually selected by the operator. When the operator selects any one of the areas C1 to C3, which are the delivery destination candidate areas, the association processing section 340 saves the following information as the information of the selected delivery destination candidate area. The association processing section 340 writes, for example, an image ID which is an ID number of the image acquired by the image acquisition section 310, a selection area number indicating the delivery destination candidate area selected by the operator, an input postal code (with a city block number), an input phone number, and an input name input by the operator, the image identifier that is automatically assigned to each image (such as "20140116152134T"), and the like, into the area selection information storage section 220.

Then, the reading processing section 300 outputs information obtained by associating the information of the delivery destination candidate area selected by the operator with the sorting information input by the operator, as the sorting destination information, to the image display terminal 100, or the warning display terminal 500 (step S320). It is to be noted that the reading processing section 300 may cause a display provided separately, a screen display section installed independently in remote areas, or the like to display the information obtained by associating the information of the delivery destination candidate area selected by the operator with the sorting information input by the operator, as the sorting destination information, on the display screen.

Next, the method for extracting the delivery destination candidate area corresponding to step S304 described above will be described. For example, there is a method such as the following. With respect to the obtained image, the image processing section 330 creates a differential image in which a portion where the density difference between adjacent pixels is equal to or more than a certain level is set to "1" and the other portion is set to "0", and performs labeling on a portion where "1"s are concatenated. Based on this labeling, the image processing section 330 sets the labeling located close in the vertical direction or the horizontal direction, concatenated in a spread manner, as a candidate for the character row. The image processing section 330 sets collectively the character row candidates closely positioned in the same direction as the delivery destination candidate area.

In addition, for example, there is a method such as the following. The image processing section 330 converts the image to a binary image of black and white pixels by comparing pixel values (brightness, color) with a threshold for each of the pixels of the image of the delivery. The image processing section 330 detects an area where the black pixels are concatenated from this conversion result, and obtains information of a rectangle that circumscribes the concatenated area of the black pixels from the concatenated area of the black pixels. This information is referred to as rectangle information. Then, by comparing the rectangle information with reference information prepared in advance, the image processing section 330 may detect the delivery destination candidate area according to the magnitude of the similarity. Further, the image processing section 330 compares the shape of the rectangular area, the position of the rectangular area on the delivery, and the like, included in the rectangle information, with the reference information prepared in advance, and based on this comparison result, extracts the delivery destination candidate areas in one or more locations.

Next, the method for determining the priority according to the possibility of being relevant to the delivery destination area that corresponds to step S306 described above will be described. For example, there is a method such as the following. The image processing section 330 evaluates how many rows are included in the delivery destination candidate area, whether the number of rows are more or less than a predetermined number n, whether the average width of the detected row is larger or smaller than a predetermined dimension, how the distribution of the width of the detected row is, how the distribution of the position of the detected row is, or the like. The image processing section 330 determines the priority according to the possibility of being relevant to the delivery destination area by comparing the positions of the row and column, the distribution of the row and column, and the like in the evaluated delivery destination candidate area with the reference information prepared in advance, and determining the comparison result comprehensively.

Thus, the delivery sorting system includes the image processing section 330 that acquires the delivery destination candidate area selected by the operator and the sorting information input by the operator, when the delivery destination information of the delivery 21 cannot be recognized. Thereby, the delivery sorting system can confirm the sorting destination of the delivery 21 based on the selected delivery destination candidate area and the input sorting information, and sort the delivery 21 appropriately.

### (Operation of Diagnosis Processing)

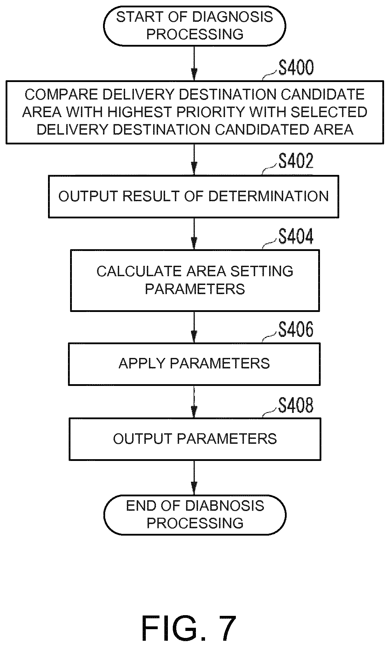

In the following, an operation of diagnosis processing according to the embodiment will be described with reference to Fig. 7. Fig. 7 is a flowchart illustrating an example of the diagnosis processing according to the embodiment. Here, the appropriateness of the parameter for extracting the delivery destination candidate area from the image, and the parameter for determining the priority of the possibility of being the delivery destination area are determined. In addition, here, when the respective parameters are not appropriate, appropriate parameters are calculated, and the calculated parameters are set in the reading processing section 300.

The determination section 410 refers to the area extraction information storage section 210 and the area selection information storage section 220, and compares the delivery destination candidate area of the highest priority determined by the image processing section 330 with the delivery destination candidate area selected as the delivery destination area by the operator, and determines whether there is a match between them (step S400). The determination section 410 outputs the result of the determination in step S400 to the warning display terminal 500 (step S402).

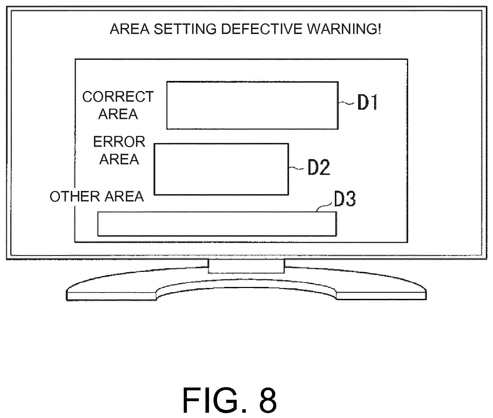

Here, an example of a display screen that is output in the warning display terminal 500 will be described with reference to Fig. 8. Fig. 8 shows an example of an interface display screen displayed in the warning display section 510 of the warning display terminal 500 and indicating the determination result of the determination section 410. In the warning display terminal 500, for example, a correct area D1, an error area D2, the other area D3, and the like are displayed, as shown in Fig. 8. The correct area means the delivery destination candidate area which the operator selects as the delivery destination area by visual recognition. The error area means an area different from the correct area, which the image processing section 330 determines as the delivery destination candidate area of the highest priority. The other area means an area that is not relevant to any of the correct area and the error area.

By performing such display, the operator can recognize whether the adjustment of the delivery sorting processing system 10, which automatically recognizes the delivery destination, is appropriate. By referring to the results displayed on the display screen by the warning display section 510, the operator can verify a defect of the setting of the delivery destination candidate area, and a defect of the determination of the delivery destination candidate area of the highest priority, and adjust the delivery sorting processing system 10.

In addition, the determination section 410 may cause the image display section 110, a display provided separately, the maintenance center installed independently in remote areas, or the like to display the information indicating the determination result on the display screen. Further, the warning display terminal 500 may inform an operator or a maintenance personnel of a suspicion of the defect by voice and the like. In addition, each time the determination is made, each time the determination is made a predetermined number of times, or when the determination result of the mismatch is made a predetermined number of times or more, the determination processing section 400 may output the determination result, or the warning display terminal 500 may cause the warning display section 510 to display the determination result. In addition, when a certain number or more of the determination results are accumulated, when a certain number of the determination results are consecutively accumulated, or when the determination results of the mismatch are accumulated by a certain proportion or more, the determination processing section 400 may output the determination result, or the warning display terminal 500 may cause the image display section 110 and the like to display the determination result.

Returning to Fig. 7, the description will be continued on the flowchart. The area setting parameter calculation section 420 calculates the parameter for the image processing section 330 to extract the delivery destination candidate area from the semantic information, based on the information stored in the area extraction information storage section 210 and the area selection information storage section 220. Further, with respect to the delivery destination candidate area which the image processing section 330 extracts, the area setting parameter calculation section 420 calculates the parameter for determining the priority according to the possibility of being relevant to the delivery destination area (step S404). It is to be noted that the area setting parameter calculation section 420 may automatically execute the calculation of the parameters when the determination by the determination section 410 is made a predetermined number of times. The timing at which the area setting parameter calculation section 420 executes the calculation of the parameters can be set appropriately.

The area setting parameter calculation section 420 performs, for example, a simulation of extracting the delivery destination candidate area and a simulation of determining the priority of the delivery destination candidate area, using a plurality of parameters prepared in advance, and calculates an optimal parameter for extracting the delivery destination candidate area, and an optimal parameter for determining the priority of the delivery destination candidate area to determine the respective parameters. For example, the area setting parameter calculation section 420 sets, for example, an area where the height of the area X is a predetermined value X1 or more, and the sum of position coordinates of the area start (sx + sy) Y is a predetermined value Y1 or less, as the delivery destination candidate area of the highest priority. In addition, for example, the area setting parameter calculation section 420 sets five kinds of values for each of the predetermined value X1 and the predetermined value Y1, and performs on all combinations of X1 and Y1 the simulation of determining the priority of the delivery destination candidate area with respect to an image of an abnormal group in which the delivery destination candidate area inappropriate as the delivery destination area is selected. Then, the area setting parameter calculation section 420 calculates correct answer rates of all the combinations of the X1 and Y1 by comparing the delivery destination area extracted from the image with the simulation results. The area setting parameter calculation section 420 determines the parameters X1 and Y1, with which an area of the highest correct answer rate among them is set, as the optimal parameters. When there are "n" parameters related to the processing of determining the priority of the area setting, and all of them are intended to be adjusted, the area setting parameter calculation section 420 may perform the n squared times of simulations based on a round robin system by preparing two kinds of variation values for each. When the number of the simulations is too high, the area setting parameter calculation section 420 may calculate an appropriate setting value by the experimental design method and the like.

In addition, as for the method for calculating the optimal parameters, for example, there is a method for calculating the optimal parameters by machine learning. For example, it is a method for setting the optimal parameters by using the gradient method. When there is a plurality of setting value candidates for the parameters, the area setting parameter calculation section 420 identifies the direction of improvement, for example, by changing each of the parameters slightly, and checking the increase and decrease of the number of correct answers before and after the change. Then, the area setting parameter calculation section 420 adjusts each of the parameters until an end condition such as a condition in which increase and decrease in the number of correct answers no longer occur is satisfied. The parameters that satisfy the end condition become the optimal parameters. In addition, the setting of the optimal parameters is not limited to the method described above, and the operator may perform the setting.

Next, the area setting parameter calculation section 420 outputs the parameter for extracting the delivery destination candidate area calculated as described above, and the parameter for determining the priority to the reading processing section 300. The reading processing section 300 applies the parameters that are input from the area setting parameter calculation section 420 in place of the parameters that are internally set (step S406). In addition, the reading processing section 300 outputs the applied parameters (step S408). It is to be noted that the parameters output from the area setting parameter calculation section 420 may be displayed on the display screen of the image display section 110, the warning display section 510, a display provided separately, a screen display section installed independently in remote areas, or the like.

As described above, in the diagnosis processing of the delivery sorting processing system 10 according to the embodiment, it can be detected whether the sorting into the sorting destination corresponding to the delivery destination of the delivery 21 is appropriately performed. The determination section 410 refers to the area extraction information storage section 210 and the area selection information storage section 220, and compares the delivery destination candidate area that is determined to have the highest possibility of being relevant to the delivery destination area with the delivery destination candidate area that is selected as the delivery destination area by the operator. Then, the determination section 410 determines whether there is a match between them, and outputs the determination result to the warning display terminal 500. Thereby, the operator can determine whether the parameters set to sort the delivery 21 into the sorting destination corresponding to the delivery destination are appropriate.

In addition, in the diagnosis processing of the delivery sorting processing system 10 according to the embodiment, the area setting parameter calculation section 420 can calculate the parameter for extracting the delivery destination candidate area from the semantic information, and the parameter for determining the priority, which are set in the image processing section 330. By applying the parameters calculated by the area setting parameter calculation section 420 to the delivery sorting processing system 10, the sorting into the sorting destination corresponding to the delivery destination of the delivery 21 can be performed more appropriately.

Thus, the determination section 410 determines whether there is a match between the delivery destination candidate area stored in the area extraction information storage section 210 and determined to have high priority as the delivery destination area, and the delivery destination candidate area stored in the area selection information storage section 220 and selected as the delivery destination area by the operator, and outputs the determination result. When there is no match between them, the determination section 410 outputs information indicating that the parameters set in the delivery sorting processing system 10 are defective. As a result, it is possible to detect defects of the parameters applied to the delivery sorting processing system 10.

Further, by referring to the information stored in the area extraction information storage section 210 and the information stored in the area selection information storage section 220, the area setting parameter calculation section 420 can calculate the parameter for extracting the delivery destination candidate area, and the parameter for determining the priority of the delivery destination candidate area. By applying the parameters that the area setting parameter calculating section 420 calculates in place of the defective parameters, the reading processing section 300 can improve the accuracy of the sorting processing of the delivery 21 without involvement of the operator's operation.

In the following, a modification relating to the above embodiment will be described.

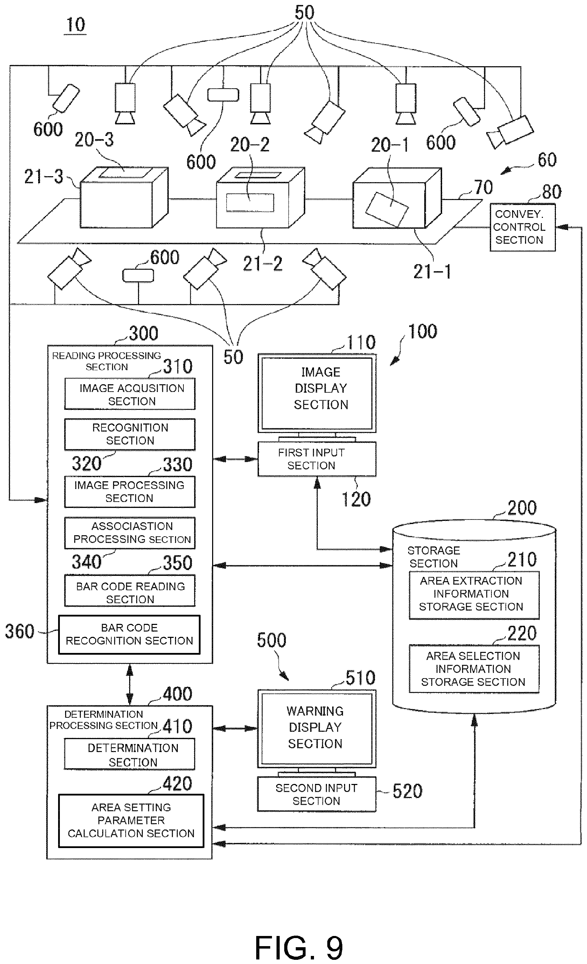

Although the sorting processing of the delivery 21 is performed by processing the image acquired by the scanner 50 in the embodiment, the delivery sorting processing system according to the present invention is not limited thereto. For example, in addition to the configuration in the embodiment, the delivery sorting processing system may include a configuration for recognizing a bar code. Fig. 9 shows another configuration example of a delivery sorting processing system 10. In addition to the configuration shown in Fig. 1, this delivery sorting processing system 10 includes a bar code scanner 600, a bar code reading section 350, and a bar code recognition section 360.

The bar code scanner 600 acquires an image including a bar code displayed on a delivery 21. The bar code reading section 350 recognizes the bar code from the image the bar code scanner 600 acquires, and further acquires information (numeric string, for example) corresponding to the bar code by decoding the bar code. The bar code recognition section 360 recognizes delivery destination information corresponding to the information acquired by the bar code reading section 350.

For example, when the bar code, which is symbolic information obtained by encoding identification information (numeric string) indicating the delivery destination information, is printed on the delivery 21, or described in a shipping bill 20, the bar code scanner 600 acquires an image including the bar code. The bar code reading section 350 recognizes the bar code from the image the bar code scanner 600 acquires, and further acquires information (numeric string) corresponding to the bar code by decoding the bar code. The bar code recognition section 360 recognizes the delivery destination information corresponding to the information (numeric string, for example) acquired by the bar code reading section 350. Thereby, the delivery destination information of the delivery 21 can be recognized, and a sorting destination of the delivery can be confirmed. In addition, according to the modification, a recognition section 320 not only acquires the delivery destination information based on the bar code, but also recognizes character information included in the image by OCR from the image obtained by scanner 50 photographing. An image processing section 330 acquires the delivery destination information based on the character information recognized by OCR.

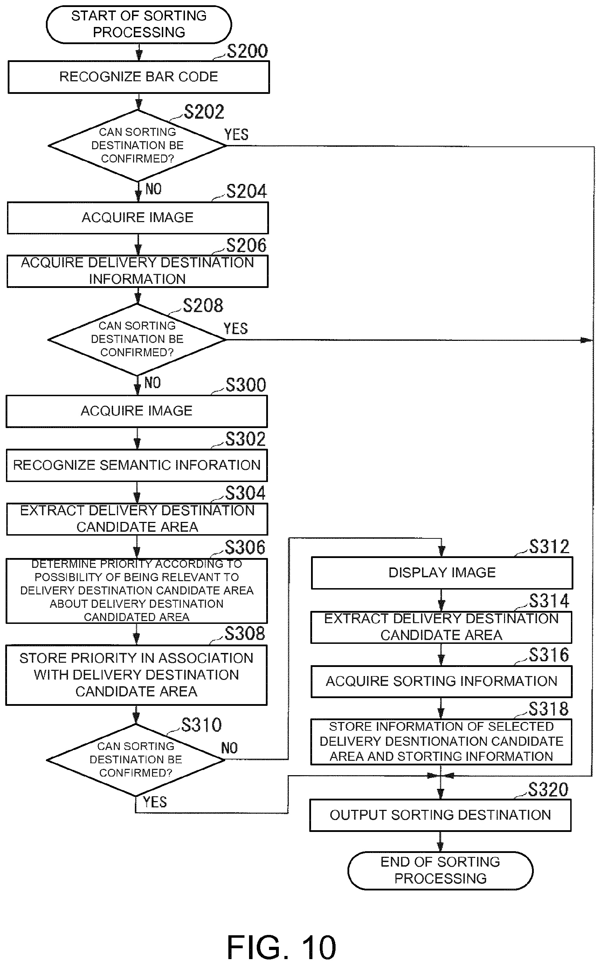

Processing in the above modification will be described with reference to Fig. 10. Fig. 10 shows a flowchart illustrating an example of a flow of the processing in the modification. According to a processing procedure illustrated in the flowchart shown in Fig. 10, the delivery sorting processing system 10 performs sorting of the delivery 21. In the processing illustrated in Fig. 10, the processing procedure that performs the same processing as in Fig. 2 described above is denoted by the same reference numeral, and the processing is omitted.

First, the bar code scanner 600 acquires an image including a bar code that is printed on the delivery 21 or described in the shipping bill 20. The bar code reading section 350 recognizes the bar code from the acquired image, and further acquires information (numeric string) the bar code indicates by decoding the bar code. The bar code recognition section 360 recognizes the delivery destination information corresponding to the acquired information (numeric string) (step S200). Then, the bar code recognition section 360 determines whether the sorting destination corresponding to the delivery destination of the delivery 21 can be confirmed (step S202). When the sorting destination can be confirmed, the sorting destination is output (step S320).

When the bar code recognition section 360 cannot confirm the sorting destination corresponding to the delivery destination, the scanner 50 acquires the image of the delivery 21 being placed on and conveyed by a belt conveyor 70 (step S204). The recognition section 320 recognizes the character information described in the shipping bill 20 affixed to the delivery 21 from the image by OCR. Then, the image processing section 330 performs processing of selecting correct delivery destination information and acquires the delivery destination information based on a character string recognized by OCR, so as to make it possible to correctly recognize the delivery destination information even when a portion of the character string recognized by OCR is incorrectly recognized (step S206). Thereby, when the sorting destination corresponding to the delivery destination can be confirmed, sorting destination information is output. When the sorting destination of the delivery destination cannot be confirmed, the step proceeds to processing in step S300. It is to be noted that the processing in step S300 may be omitted, and the image obtained by the photographing in step S204 may be used in step S302.

Thereby, the delivery sorting processing system 10 in the modification performs the processing of recognizing a bar code in addition to the recognition processing by OCR, and therefore, can improve the probability that the sorting destination corresponding to the delivery destination of the delivery can be confirmed.

According to at least one of the embodiments described above, the delivery sorting processing system stores the delivery destination candidate area determined to have high priority by the image processing section 330, and the delivery destination candidate area selected as the delivery destination area by the operator's operation on the first input section 120, in association with each other in the storage section 200. In addition, the delivery sorting processing system has a function of determining whether there is a match between the delivery destination candidate area and determined to have high priority and the delivery destination candidate area that the operator selects as the delivery destination area stored in the storage section 200, and outputting the determination result. Therefore, the delivery sorting processing system 10 can provide the information necessary for adjusting the system that automatically recognizes the delivery destination to the image processing section.

In addition, according to at least one of the embodiments, the delivery sorting processing system includes the area setting parameter calculating section 420 that calculates the parameter for extracting the delivery destination candidate area and the parameter for determining the priority of the delivery destination candidate area. Further, the delivery sorting processing system can provide these calculated parameters to the operator or the reading processing section 300. Therefore, the delivery sorting processing system can acquire the delivery destination information appropriately from the delivery. As a result, the delivery sorting processing system can sort the delivery appropriately into the sorting destination corresponding to the delivery destination.

While some embodiments according to the present invention have been described, these embodiments have been presented by way of example only, and are not intended to limit the scope of the invention as defined in the claims.

## Claims

1. A delivery sorting processing system (10) comprising: an image acquisition section (310) that acquires an image by photographing a delivery;
an input section (120) that receives an operation of an operator;
a recognition section (320) that recognizes semantic information included in the image based on the acquired image;
an image processing section (330) that extracts a candidate for a delivery destination area in the image based on the semantic information and determines priority according to a possibility of being relevant to a delivery destination area;
an association processing section (340) that processes a delivery based on information included in a candidate for a delivery destination area of highest priority when a predetermined condition is satisfied, determines a delivery destination based on information included in a candidate for a delivery destination area selected by the operator's operation, and stores a candidate for a delivery destination area determined to have high priority and a candidate for a delivery destination area selected by the operator's operation in association with each other in a storage section (200) in a case where a predetermined condition is not satisfied;
a determination section (410) that refers to the storage section (200), determines whether there is a match between a candidate for a delivery destination area determined to have high priority by the image processing section (330) and a candidate for a delivery destination area selected by the operator's operation stored in the storage section (200), and outputs a determination result, and
an area setting parameter calculation section (420) that calculates a parameter for extracting a candidate for a delivery destination area or a parameter for determining priority according to a possibility of being relevant to a delivery destination area, based on the determination result by the determination section (410) or information stored in the storage section (200),
**characterized in that**
the area setting parameter calculation section (420) executes a simulation based on information stored in the storage section (200), and calculates a parameter for extracting a candidate for each of delivery destination areas from the semantic information, and calculates a parameter for determining a priority according to a possibility of being relevant to a delivery destination area of a delivery.

2. The delivery sorting processing system according to claim 1, wherein the area setting parameter calculation section (420) calculates a parameter for extracting a candidate for each of delivery destination areas from the semantic information and calculates a parameter for determining a priority according to a possibility of being relevant to a delivery destination area of a delivery based on information stored in the storage section (200) by machine learning.

3. The delivery sorting processing system according to claim 1 or 2, wherein the case where the predetermined condition is satisfied is a case where a sorting destination of a delivery can be identified based on the information included in a candidate for a delivery destination area of the highest priority.

4. The delivery sorting processing system according to any of claims 1 to 3, wherein the association processing section (340) performs processing of determining a sorting destination of a delivery based on sorting information by an operator's operation which the input section (120) receives, based on information included in a candidate for a delivery destination area selected by the operator's operation which the input section (120) receives, in the case where the predetermined condition is not satisfied.

5. The delivery sorting processing system according to any of claims 1 to 4, further comprising
a bar code scanner (600) that acquires an image including a bar code from a delivery,
a bar code reading section (350) that recognizes a bar code from an image including a bar code and acquires information corresponding to a bar code by decoding a recognized bar code, and
a bar code recognition section (360) that recognizes delivery destination information from information corresponding to a bar code.

6. The delivery sorting processing system according to any of claims 1 to 5, wherein the area setting parameter calculation section (420) applies a calculated parameter for extracting a candidate for a delivery destination area, and a calculated parameter for determining priority according to a possibility of being relevant to a delivery destination area as parameters of the image processing section (330).

## Patentansprüche

1. Sendungssortierungs-Verarbeitungssystem (10) mit:
einem Bilderfassungsabschnitt (310), der durch Fotografieren einer Sendung ein Bild erfasst;
einem Eingabeabschnitt (120), der einen Bedienvorgang durch einen Bediener entgegennimmt;
einem Erkennungsabschnitt (320), der basierend auf dem erfassten Bild in dem Bild enthaltene semantische Informationen erkennt;
einem Bildverarbeitungsabschnitt (330), der basierend auf den semantischen Informationen einen Kandidaten für einen Sendungs-Bestimmungsort-Bereich in dem Bild extrahiert und eine Priorität gemäß einer Möglichkeit bestimmt, für einen Sendungs-Bestimmungsort-Bereich relevant zu sein;
einem Verknüpfungs-Verarbeitungsabschnitt (340), der basierend auf in einem Kandidaten für einen Sendungs-Bestimmungsort-Bereich mit einer höchsten Priorität enthaltenen Informationen eine Sendung verarbeitet, wenn eine vorbestimmte Bedingung erfüllt ist, basierend auf Informationen, die in einem durch den Bedienvorgang des Bedieners ausgewählten Kandidaten für einen Sendungs-Bestimmungsort-Bereich enthalten sind, einen Sendungs-Bestimmungsort bestimmt und einen Kandidaten für einen Sendungs-Bestimmungsort-Bereich, für den eine hohe Priorität bestimmt wurde, und einen Kandidaten für einen Sendungs-Bestimmungsort-Bereich, der durch den Bedienvorgang des Bedieners ausgewählt wurde, miteinander Verknüpft in einem Speicherabschnitt (200) speichert, wenn ein Fall vorliegt, dass eine vorbestimmte Bedingung nicht erfüllt ist,
einem Bestimmungsabschnitt (410), der auf den Speicherabschnitt (200) Bezug nimmt, bestimmt, ob zwischen einem Kandidaten für einen Sendungs-Bestimmungsort-Bereich, für den von dem Bildverarbeitungsabschnitt (330) bestimmt wurde, dass er eine hohe Priorität aufweist, und einem Kandidaten für einen Sendungs-Bestimmungsort-Bereich, der durch den Bedienvorgang des Bedieners ausgewählt wurde, welche in dem Speicherabschnitt (200) gespeichert sind, eine Übereinstimmung vorliegt, und ein Bestimmungsergebnis ausgibt, und
einem Bereichs-Einstellungsparameter-Berechnungsabschnitt (420), der einen Parameter zum Extrahieren eines Kandidaten für einen Sendungs-Bestimmungsort-Bereich oder einen Parameter zum Bestimmen einer Priorität gemäß einer Möglichkeit, für einen Sendungs-Bestimmungsort-Bereich relevant zu sein, basierend auf dem Bestimmungsergebnis des Bestimmungsabschnitts (410) oder auf in dem Speicherabschnitt (200) gespeicherten Informationen berechnet,
**dadurch gekennzeichnet, dass**
der Bereichs-Einstellungsparameter-Berechnungsabschnitt (420) basierend auf Informationen, die in dem Speicherabschnitt (200) gespeichert sind, eine Simulation ausführt und einen Parameter zum Extrahieren eines Kandidaten für einen jeden von Sendungs-Bestimmungsort-Bereichen aus den semantischen Informationen berechnet und einen Parameter zum Bestimmen einer Priorität gemäß einer Möglichkeit berechnet, für einen Sendungs-Bestimmungsort-Bereich einer Sendung relevant zu sein.

2. Sendungssortierungs-Verarbeitungssystem nach Anspruch 1, wobei der Bereichs-Einstellungsparameter-Berechnungsabschnitt (420) einen Parameter zum Extrahieren eines Kandidaten für einen jeden von Sendungs-Bestimmungsort-Bereichen aus den semantischen Informationen und einen Parameter zum Bestimmen einer Priorität gemäß einer Möglichkeit, für einen Sendungs-Bestimmungsbereich einer Sendung relevant zu sein, basierend auf in dem Speicherabschnitt gespeicherten Informationen mittels maschinellem Lernen berechnet.

3. Sendungssortierungs-Verarbeitungssystem nach Anspruch 1 oder 2, wobei der Fall, dass die vorbestimmte Bedingung erfüllt ist, ein Fall ist, bei dem ein Sortierungs-Bestimmungsort einer Sendung basierend auf den Informationen identifiziert werden kann, die in einem Kandidaten für einen Sendungs-Bestimmungsort-Bereich der höchsten Priorität enthalten sind.

4. Sendungssortierungs-Verarbeitungssystem nach einem der Ansprüche 1 bis 3, wobei der Verknüpfungs-Verarbeitungsabschnitt (340) in dem Fall, dass wenn die vorbestimmte Bedingung nicht erfüllt ist, eine Verarbeitung zum Bestimmen eines Sortierungs-Bestimmungsorts einer Sendung basierend auf Sortieren von Informationen aus einem Bedienvorgang eines Bedieners, welchen der Eingabeabschnitt (120) entgegennimmt, basierend auf in einem durch den Bedienvorgang des Benutzers, welchen der Eingabeabschnitt (120) entgegennimmt, gewählten Kandidaten für einen Sendungs-Bestimmungsort-Bereich, enthaltenen Informationen durchführt.

5. Sendungssortierungs-Verarbeitungssystem nach einem der Ansprüche 1 bis 4, ferner umfassend
einen Strichcode-Scanner (600), der ein Bild, welches einen Strichcode umfasst, von einer Sendung erfasst,
einen Strichcode-Leseabschnitt (350), der aus einem einen Strichcode umfassenden Bild einen Strichcode erkennt und Informationen, die einem Strichcode entsprechen, durch Decodieren eines erkannten Strichcodes erfasst, und
einen Strichcode-Erkennungsabschnitt (360), der aus Informationen, die einem Strichcode entsprechen, Sendungs-Bestimmungsort-Informationen erkennt.

6. Sendungssortierungs-Verarbeitungssystem nach einem der Ansprüche 1 bis 5, wobei der Bereichs-Einstellungsparameter-Berechnungsabschnitt (420) einen berechneten Parameter zum Extrahieren eines Kandidaten für einen Sendungs-Bestimmungsort-Bereich und einen berechneten Parameter zum Bestimmen einer Priorität gemäß einer Möglichkeit, für einen Sendungs-Bestimmungsort-Bereich relevant zu sein, als Parameter des Bildverarbeitungsabschnitts (330) anwendet.

## Revendications

1. Système de traitement de tri (10) de livraison, comprenant : une section d'acquisition d'image (310) qui acquiert une image par une photographie d'une livraison ;
une section d'entrée (120) qui reçoit une opération d'un opérateur ;
une section de reconnaissance (320) qui reconnaît des informations sémantiques comprises dans l'image sur la base de l'image acquise ;
une section de traitement d'image (330) qui extrait un candidat associé à une zone de destination de livraison de l'image sur la base des informations sémantiques et qui détermine une priorité conformément à une possibilité de pertinence par rapport à une zone de destination de livraison ;
une section de traitement d'association (340) qui traite une livraison sur la base d'informations comprises dans un candidat associé à une zone de destination de livraison de priorité la plus élevée lorsqu'une condition prédéterminée est satisfaite, qui détermine une destination de livraison sur la base d'informations comprises dans un candidat associé à une zone de destination de livraison sélectionnée par l'opération de l'opérateur et qui, dans un cas dans lequel une condition prédéterminée n'est pas satisfaite, mémorise, en association l'un avec l'autre, un candidat associé à une zone de destination de livraison déterminé comme ayant une haute priorité et un candidat associé à une zone de destination de livraison sélectionnée par l'opération de l'opérateur dans une section de mémorisation (200) ;
une section de détermination (410) qui se réfère à la section de mémorisation (200), qui détermine s'il y a, ou non, une correspondance entre un candidat associé à une zone de destination de livraison déterminé comme ayant une haute priorité par la section de traitement d'image (330) et un candidat associé à une zone de destination de livraison mémorisé sélectionnée par l'opération de l'opérateur mémorisé dans la section de mémorisation (200), et qui délivre un résultat de détermination, et
une section de calcul de paramètres de définition de zone (420) qui calcule un paramètre permettant d'extraire un candidat associé à une zone de destination de livraison ou un paramètre permettant de déterminer une priorité conformément à une possibilité de pertinence par rapport à une zone de destination de livraison, sur la base du résultat de détermination obtenu par la section de détermination (410) ou d'informations mémorisées dans la section de mémorisation (200),
**caractérisé en ce que**
la section de calcul de paramètres de définition de zones (420) exécute une simulation sur la base d'informations mémorisées dans la section de mémorisation (200), et calcule un paramètre permettant d'extraire un candidat associé à chacune de zones de destination de livraison à partir des informations sémantiques, et calcule un paramètre permettant de déterminer une priorité conformément à une possibilité de pertinence par rapport à une zone de destination de livraison d'une livraison.

2. Système de traitement de tri de livraison selon la revendication 1, dans lequel la section de calcul de paramètres de définition de zone (420) calcule un paramètre permettant d'extraire un candidat associé à chacune de zones de destination de livraison des informations sémantiques et calcule un paramètre permettant de déterminer une priorité conformément à une possibilité de pertinence par rapport à une zone de destination de livraison d'une livraison sur la base d'informations mémorisées dans la section de mémorisation (200) par un apprentissage machine.

3. Système de traitement de tri de livraison selon la revendication 1 ou la revendication 2, dans lequel le cas selon lequel est satisfaite la condition prédéterminée correspond à un cas dans lequel il est possible d'identifier une destination de tri d'une livraison sur la base des informations comprises dans un candidat associé à une zone de destination de livraison ayant la priorité la plus élevée.

4. Système de traitement de tri de livraison selon l'une quelconque des revendications 1 à 3, dans lequel, dans un cas dans lequel la condition prédéterminée n'est pas satisfaite, la section de traitement d'association (340) exécute un traitement de détermination de destination de tri d'une livraison basé sur des informations de tri par une opération de l'opérateur que reçoit la section d'entrée (120), sur la base d'informations comprises dans un candidat associé à une zone de destination de livraison sélectionnée par l'opération de l'opérateur que reçoit la section d'entrée (120).

5. Système de traitement de tri de livraison selon l'une quelconque des revendications 1 à 4, comprenant en outre
un lecteur de code à barres (600) qui acquiert une image comprenant un code à barres à partir d'une livraison,
une section de lecture (350) de code à barres qui reconnaît un code à barres à partir d'une image comprenant un code à barres et qui acquiert des informations correspondant à un code à barres par un décodage du code à barres reconnu, et
une section de reconnaissance (360) de code à barres qui reconnaît des informations de destination de livraison à partir d'informations correspondant à un code à barres.

6. Système de traitement de tri de livraison selon l'une quelconque des revendications 1 à 5, dans lequel la section de calcul de paramètres de définition de zone (420) applique un paramètre calculé permettant d'extraire un candidat associé à une zone de destination de livraison, et un paramètre calculé permettant de déterminer une priorité conformément à une possibilité de pertinence par rapport à une zone de destination de livraison en tant que paramètres de la section de traitement d'image (330).
